# EUROPÄISCHE PATENTSCHRIFT

(11) **EP 1 381 845 B1**
(45) Veröffentlichungstag und Bekanntmachung des Hinweises auf die Patenterteilung: **30.01.2013**
(21) Anmeldenummer: 02727580.9
(22) Anmeldetag: 24.04.2002
(51) Int. Cl.: G01N 15/14, G06K 9/46, C12M 1/34

(54) **VERFAHREN UND VORRICHTUNG ZUR ERFASSUNG VON OBJEKTZUSTÄNDEN**
METHOD AND DEVICE FOR DETECTING THE STATE OF OBJECTS
PROCEDE ET DISPOSITIF POUR DETECTER DES ETATS D'OBJETS

(30) Priorität: 26.04.2001 DE 10120498
(43) Veröffentlichungstag der Anmeldung: 21.01.2004
(73) Patentinhaber: Evotec Technologies GmbH, 40225 Düsseldorf (DE)
(72) Erfinder: SCHNELLE, Thomas, 10843 Berlin (DE); MIETCHEN, Daniel, 12557 Berlin (DE); HAGEDORN, Rolf, 13057 Berlin (DE)
(74) Vertreter: Hertz, Oliver
(86) Internationale Anmeldenummer: PCT/EP2002/004546
(87) Internationale Veröffentlichungsnummer: WO 2002/088676

(56) Entgegenhaltungen:
- WO-A-00/45147
- WO-A-01/02837
- WO-A-97/22870
- DATABASE COMPENDEX [Online] ENGINEERING INFORMATION, INC., NEW YORK, NY, US; MEJIA J ET AL: "CCD stellar sensor of the MASCO telescope pointing system" Database accession no. E2000295194659 XP002209291 & PSB1 SYMPOSIUM OF THE COSPAR PANEL ON TECHNICAL PROBLEMS RELATED TO 'SCIENTIFIC BALLOONING' - 32ND COSPAR SCIENTIFIC ASSEMBLY;NAGOYA, JPN JUL 12-JUL 19 1998, Bd. 26, Nr. 9, 12. Juli 1998 (1998-07-12), Seiten 1407-1410, Adv Space Res;Advances in Space Research 2000 Elsevier Science Ltd, Exeter, Engl

## Beschreibung

Die Erfindung betrifft ein Verfahren zur Erfassung von Objektzuständen, insbesondere zur Erfassung des Bewegungszustands, von Oberflächenmerkmalen oder des Vorhandenseins mindestens eines Objekts, z. B. in einem Messsystem, und eine Vorrichtung zur Umsetzung des Verfahrens.

Es ist allgemein bekannt, fluidische Mikrosysteme zur teilchenspezifischen Manipulierung mikroskopisch kleiner Objekte unter der Wirkung hydrodynamischer und/oder elektrischer Kräfte zu verwenden. Die Manipulierung biologischer Teilchen in Mikrosystemen mit hochfrequenten elektrischen Feldern auf der Grundlage negativer Dielektrophorese wird beispielsweise von G. Fuhr et al. in "Naturwissenschaften", Bd. 81, 1994, S. 528 ff., beschrieben. Die Manipulierung der Objekte umfasst u. a. eine Sortierung nach bestimmten Eigenschaften, eine Objektveränderung unter Wirkung elektrischer Felder (z. B. Zellporation), eine chemische Behandlung, eine gegenseitige Zusammenführung und Wechselwirkung der Objekte und dergleichen. Die Bereitstellung vorbestimmter hydrodynamischer und/oder elektrischer Kräfte erfolgt durch die Gestaltung der Kanalstruktur des Mikrosystems bzw. die geometrische Form von Mikroelektroden zur Ausbildung hochfrequenter elektrischer Felder und deren Ansteuerung.

Zur Charakterisierung von suspendierten Mikroobjekten wie Latexpartikeln, lebenden Zellen etc. werden seit langem über elektrische Rotations- und Wechselfelder induzierte Bewegungen genutzt (siehe z. B. U. Zimmermann et al. in "Electromanipulation of Cells", CRC Press Inc., 1996). Es kann sich dabei um Rotationsbewegungen oder um oszillatorische Bewegungen auf einer geradlinigen oder gekrümmten Bewegungsbahn handeln. Aus der Bewegungsgeschwindigkeit des Objektes als auch aus seiner Auslenkung kann auf passive elektrische Eigenschaften geschlossen werden. In der Regel liegen die Rotationsgeschwindigkeiten der Objekte im Bereich von 100 Umdrehungen pro Sekunde bis zu 1 Umdrehung pro Minute, typischerweise langsamer als 10 Umdrehungen pro Sekunde. In gleicher Größenordnung liegen die Zeiten der oszillatorischen Bewegungen.

Insbesondere für biologisch-medizinische Fragestellungen hat sich dieses Verfahren als der Impedanzmessung vergleichbar und hochauflösend erwiesen. Die Rotation des Objektes verhält sich dabei proportional zum Imaginärteil des Clausius-Mosotti-Faktors, während die oszillatorische Bewegung in einem inhomogenen Wechselfeld dem Realteil dieses Faktors entspricht (siehe T. B. Jones in "Electromechanics of Particles", Cambridge University Press, Cambridge, 1995).

Verfahren zur Erfassung der Rotation sind beispielsweise aus DE 33 25 843 und DD-Wirtschaftspatent WP GO1N/281223, 1986, bekannt. Dabei handelt es sich um die alternierende Applikation zweier Anregungsfelder unterschiedlicher Drehrichtung, bei denen die Anschaltzeiten elektronisch verändert werden können. Diese werden so lange variiert, bis der Stillstand des Objektes eintritt. Der Stillstand des Objektes wurde bislang jedoch ebenfalls ausschließlich über visuelle Beobachtung bestimmt.

Es ist auch bekannt, die Präsenz von kleinen Teilchen in Suspensionen auf der Basis von Streulichtmessungen zu erfassen (siehe J. Gimsa et al. in "Colloids and Surfaces A" Bd. 98, 1995, S. 243-249). Dieses Prinzip läßt sich jedoch nur bei einer Vielzahl von Teilchen (in der Regel einige Hundert oder mehr) und somit teilchenunspezifisch realisieren. Außerdem lassen sich keine Angaben über den Bewegungszustand von Teilchen (Ort, Geschwindigkeit oder dergleichen) ableiten.

Es ist bekannt, die Bewegung komplex strukturierter Objekte über Bildverarbeitungssysteme zu erfassen. Dazu wird das mikroskopisch erzeugte Bild zu verschiedenen Zeitpunkten elektronisch aufgenommen, gespeichert und versucht, über eine entsprechende Raumtransformation einer Vielzahl von Bildpunkten die erfolgte Bewegung zu rekonstruieren. Diese Verfahren haben den Nachteil hoher Informationsverarbeitungsdichte und damit langwieriger und aufwendiger Rechnerverarbeitung (siehe De Gasperis et al. in "Meas. Sci. Techn." Bd. 9, 1998 , S. 518-529). Besondere Schwierigkeiten treten bei Veränderungen der Objektstruktur während der Messung auf, z. B. bei Verlagerung in der Fokusebene, Lageänderungen des Objektes und bei schwach kontrastierten Objekten. Zudem rotieren nicht-sphärische oder mit einer Laserpinzette stabilisierte Zellen in rotierenden elektrischen Feldern konstanter Frequenz häufig nicht mit konstanter Winkelgeschwindigkeit während einer Objektumdrehung. Damit liefern die Bilderkennungsverfahren, die auf der Analyse weniger Bilder beruhen, unzuverlässige Messwerte.

Die bisher bekannten Mikrosysteme erlauben zwar eine Kontrolle der jeweiligen Objektmanipulierung mit optischen Mitteln, z. B. unter Verwendung eines Mikroskops mit einer Kamera. Diese optische Kontrolle ist jedoch bisher auf visuelle Überprüfungen oder den Einsatz aufwendiger Bilderkennungsverfahren zur Bearbeitung des Kamerabildes beschränkt. Die Bildverarbeitungsverfahren sind jedoch, soll eine Echtzeit-Kontrolle ausgeübt werden, für die auftretenden Objektgeschwindigkeiten erheblich zu langsam. Dadurch ist bisher die Implementierung automatischer Systemregelungen, bei denen beispielsweise bestimmte Verfahrensverläufe in Abhängigkeit von Ort, Bewegungszustand oder Anzahl beobachteter Objekte erfolgen, ausgeschlossen.

Aus der WO 98/29732 ist ein Verfahren zur Bewegungserfassung an mikroskopischen Objekten bekannt, die eine zumindest teilweise periodische Bewegung ausführen. Dieses Verfahren basiert auf der Anwendung einer Fourier-Analyse eines Detektorsignals, das die Objektbewegung über eine Vielzahl von Bewegungsperioden charakterisiert. Es stellt eine erhebliche Vereinfachung gegenüber der Anwendung von computergestützten Bildverarbeitungsverfahren dar, ist jedoch in der Anwendung auf periodische Bewegungen beschränkt. Im Allgemeinen treten in einem Mikrosystem jedoch auch nicht-periodische Bewegungen oder Ruhezustände der Objekte auf, an deren Detektion insbesondere zur automatischen Steuerung eines Mikrosystems ein Interesse besteht.

Bei dem in WO 00/45147 beschriebenen Verfahren zur Detektion mikroskopisch kleiner Objekte ist eine strukturierte Maske im Strahlengang oder am Detektor einer Messeinrichtung vorgesehen, die eine charakteristische Dimension besitzt, die kleiner als die Dimension des Objekts am jeweiligen Ort der Maske ist. Die Auswertung des von der Maske übertragenen Lichtes erlaubt Aussagen über das Vorhandensein des Objekts, seiner Position, seiner Form oder die zeitliche Änderung seiner Position. Das in WO 00/45147 beschriebene Verfahren besitzt den Nachteil eines hohen Justageaufwands und einer geringen Variabilität bei der Objektdetektion. Die Objektzustände können nur in Echtzeit auf der Grundlage des von der Maske übertragenen Lichtes erfasst werden. Die Anwendbarkeit des Verfahrens ist auf Objekte beschränkt, bei denen die erfassten Bilder in Bezug auf die äußere Form oder die Oberflächeneigenschaften beispielsweise auf der Grundlage von Kontrasten oder bestimmten Bildmerkmalen eine Bildauswertung ermöglichen.

Die Aufgabe der Erfindung ist es, ein verbessertes Verfahren zur Erfassung von Objektzuständen bereitzustellen, mit dem die Nachteile der herkömmlichen Techniken überwunden werden und das sich insbesondere durch einen erweiterten Einsatzbereich und einen geringen Bearbeitungsaufwand auszeichnet. Das erfindungsgemäße Verfahren soll insbesondere ermöglichen, die Auswertungsqualität im Verfahrensverlauf zu verbessern. Die Zustandserfassung soll problemlos an verschiedene Objekte oder Messsituationen angepasst werden können. Die Aufgabe der Erfindung ist es auch, eine Vorrichtung zur Umsetzung des Verfahrens und Anwendungen des Verfahrens anzugeben.

Diese Aufgaben werden mit-einem Verfahren und einer Vorrichtung mit den Merkmalen gemäß den Patentansprüchen 1 und 11 gelöst. Vorteilhafte Ausführungsformen und Anwendungen der Erfindung ergeben sich aus den abhängigen Ansprüchen.

Die Grundidee der Erfindung ist es, eine Vielzahl von Objektbildern oder Objektteilbildern in einer Arbeitsspeichereinrichtung bereitzustellen, die relativ zu einer Sensoreinrichtung, z. B. Mess- und Kameraeinrichtung, zur Aufnahme der Bilder nachgeordnet ist. Abweichend vom herkömmlichen Verfahren unter Verwendung einer strukturierten Maske, die im Strahlengang und/oder am Detektor angeordnet ist, wird beim erfindungsgemäßen Verfahren die Maskierung von der Bildaufnahme in den Bereich der Bildauswertung verlagert. In einer Analysatorschaltung werden die Bildwerte mindestens eines ausgewählten Maskenpunktes für eine vorbestimmte Messzeit (oder laufend) und/oder für eine vorbestimmte Anzahl von Bildern verarbeitet, um den Zustand und/oder das Vorhandensein mindestens eines Objekts zu erfassen.

Die Vielzahl von Bildern (digitale Pixelbilder) repräsentieren eine zeitliche Folge von Objektzuständen und/oder eine Vielzahl von Objekten oder Objektteilen. Damit kann eine zeitliche (periodische oder nicht-periodische) Entwicklung eines Objektzustandes oder eine, ggf. zeitunabhängige, räumliche Struktur von einem oder mehreren Objekten oder Objektteilen erfaßt werden. Mit besonderem Vorteil lassen sich auch beide Gesichtspunkte gleichzeitig analysieren.

Als Zustand des Objekts werden vorzugsweise der Bewegungszustand, Oberflächenmerkmale, Volumenmerkmale von Objekten mit zumindest teilweise transparenter Oberfläche und/oder Größenmerkmale des Objektes ermittelt.

Durch die erfindungsgemäße Trennung von Bildaufnahme und Bildauswertung werden eine Reihe von Vorteilen erzielt, die einerseits die Vermeidung von Justierschritten und andererseits die hohe Variabilität bei der Maskenwahl betreffen. Trotz der genannten Trennung kann die Objekterfassung in Echtzeit erfolgen. Die ausgewählte Maske kann während des Verfahrensablaufs an die Objekt- und/oder Messbedingungen angepasst werden. Es kann eine Nachanalyse von aufgenommenen und gespeicherten Bildern erfolgen.

Gemäß der Erfindung erfolgt bei der Erfassung von Objektzuständen eine zeitlich veränderliche Auswahl von Maskenpunkten. Einzelne Maskenpunkte, einzelne Masken oder mehrere Masken werden in Bezug auf ihre Lage, Anzahl und/oder Größe anwendurigsabhängig entsprechend einem vorbestimmten Zeitprogramm oder in Abhängigkeit vom erfassten Zustand des Objekts oder in Abhängigkeit von Messbedingungen verändert.

Die Bereitstellung der Bilder in einer Arbeitsspeichereinrichtung ermöglicht vorteilhafterweise die Durchführung einer einfachen Bildvorbearbeitung der Bilder, z. B. eine Kontrasterhöhung und/oder eine Erzeugung von Differenzbildern. Durch heute verfügbare Rechner mit hohen Rechenleistungen ist diese zwischengeschaltete Bildbearbeitung möglich, ohne auf die Echtzeitfähigkeit oder Quasi-Echtzeitfähigkeit der Zustandserfassung verzichten zu müssen. Mit der Bildbearbeitung wird ermöglicht, dass anwendungsabhängig bestimmte Objekte mit kontrastarmen Oberflächen oder undefinierten Umrissformen überhaupt erst der erfindungsgemäßen Zustandserfassung zugänglich werden.

Gemäß einer weiteren vorteilhaften Ausführungsform der Erfindung wird die Bildaufnahme und die erfindungsgemäße Zustandserfassung zeitlich voneinander getrennt. Die mit der Sensoreinrichtung aufgenommenen Bilder werden beispielsweise zunächst in einem Bildspeicher in Form von Bildfolgen (z. B. Videosequenzen) gespeichert. Zur Durchführung des erfindungsgemäßen Verfahrens werden die Bilder von der Bildspeichereinrichtung in der Arbeitsspeichereinrichtung bereitgestellt und dort der Maskenpunktauswahl und Analyse unterzogen. Dieses Verfahren besitzt den Vorteil, dass Bildfolgen ggf. wiederholt mit verschiedenen Maskierungen oder mit Blick auf verschiedene Objekteigenschaften ausgewertet werden können. Erfindungsgemäß können verschiedene Masken ausgewählt werden, die zeitgleich oder zeitlich aufeinanderfolgend verwendet werden.

Die erfindungsgemäße Zustandserfassung wird vorzugsweise an mikroskopisch kleinen Objekten (typische Dimensionen: < 100 µm) durchgeführt, die beispielsweise in fluidischen Mikrosystemen unter Anwendung hydrodynamischer, dielektrischer und/oder optischer Kräfte bewegt, gehaltert, vermessen und/oder behandelt werden. Es erfolgt vorzugsweise die Erfassung von Rotations- und Oszillationsbewegungen an Mikroobjekten in rotierenden elektrischen Feldern, z. B. in einer Feldfalle, oder in sich anderweitig periodisch ändernden Wechselfeldern, wobei ggf. eine Halterung mit einer sog. Laserpinzette (optischer Käfig oder "optical tweezer") vorgesehen ist. Die erfindungsgemäße Objekterfassung kann aber auch an Festphasen-adsorbierten Mikroobjekten oder makroskopischen Körpern umgesetzt werden, wie dies unten erläutert wird.

Besonders bevorzugt wird die Erfindung zur Erfassung des Zustandes und/oder des Vorhandenseins von biologischen Objekten, insbesondere Zellen, Zellbestandteilen, Zellgruppen oder Zellschnitten, angewendet.

Gegenstand der Erfindung ist auch eine Vorrichtung zur Erfassung von Objektzuständen mit einer Arbeitsspeichereinrichtung zur Bereitstellung von mindestens zwei Bildern eines Objekts oder eines Objektteils, einer Filtereinrichtung zur Ermittlung von Bildwerten der Bilder an mindestens einem vorgewählten Maskenpunkt und einer Analysatorschaltung, die zur Analyse der Bildwerte der Maskenpunkte eingerichtet ist. Die Arbeitsspeichereinrichtung umfasst vorzugsweise einen Framegrabber-Schaltkreis (Framegrabber-Karte).

Die Erfindung besitzt die folgenden Vorteile. Die Zustandserfassung ist ohne besonderen Aufwand automatisierbar. Zur Umsetzung des Verfahrens können an sich verfügbare Systeme, wie z. B. CCD-Kameras und Framegrabber-Karten, verwendet werden. Zur Analyse von Bildwerten können herkömmliche Methoden zur Objekttransformation, die sich durch einen hohen Rechenaufwand auszeichnen, vermieden werden. Es können Objektrotationen in kurzen Messzeiten erfasst werden. So wird zur Ermittlung der Objektrotation (Drehfrequenz) eine Folge von Bildern benötigt, die z. B. nur 1.5 Umdrehungen abdecken müssen. Es reichen beispielsweise 8 bis 10 Bilder zur Ermittlung eines zuverlässigen Rotationswertes. Die Zustandserfassung ist auch zur Analyse von nicht-konstanten Rotationsgeschwindigkeiten geeignet.

Weitere Einzelheiten und Vorteile der Erfindung werden im Folgenden unter Bezug auf die beigefügten Zeichnungen beschrieben. Es zeigen:
- Figur 1: eine Blockdarstellung einer erfindungsgemäßen Vorrichtung,
- Figur 2: eine schematische Darstellung einer Anwendung der Erfindung in der Mikrosystemtechnik,
- Figur 3: eine schematische Illustration der erfindungsgemäßen Maskierung von Bildern,
- Figur 4: eine Kurvendarstellung des Zeitverlaufs von Bildwerten bei einer Rotationsmessung,
- Figur 5: eine Kurvendarstellung des Zeitverlaufs einer Rotationsmessung mit nicht-konstanter Umdrehungsfrequenz,
- Figur 6: eine schematische Illustration der Kombination eines Mikroelektrodensystems mit einer Laserpinzette,
- Figur 7: verschiedene Ausführungsformen erfindungsgemäß verwendeter Masken,
- Figur 8: eine Illustration der Erfassung periodischer Bewegungen,
- Figuren 9, 10: Illustrationen der Erfassung von Wachstumsprozessen,
- Figuren 11, 12: Illustrationen der Zustandserfassung an makroskopischen Körpern (keine Ausführungsformen der Erfindung),
- Figur 13: eine Illustration eines Objektes mit diskreter Rotationssymmetrie, und
- Figur 14: eine Illustration des erfindungsgemäßen Zählens von Objekten.

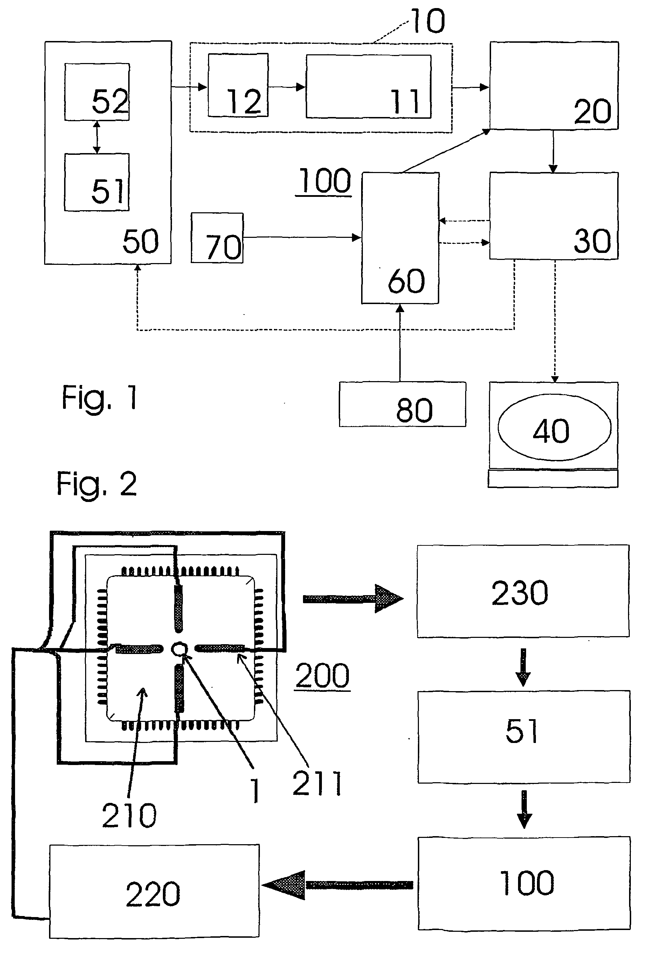

Die Blockdarstellung in Figur 1 zeigt schematisch eine Ausführungsform einer erfindungsgemäßen Vorrichtung 100 zur Erfassung von Objektzuständen mit einer Arbeitsspeichereinrichtung 10, einer Filtereinrichtung 20, einer Analysatoreinrichtung 30 und einer Anzeige-, Speicherungs- und/oder Ausgabeeinrichtung 40. Die Arbeitsspeichereinrichtung 10 enthält den Arbeitsspeicher 11 und ggf. eine Bildgebereinrichtung 12, die dem Arbeitsspeicher 11 eingangsseitig vorgeschaltet sind. Die Bildgebereinrichtung 12 ist mit einer Bildquelle 50 verbunden und dient der Zuführung von Bildwerten, die jeweils Bildpunkten der von der Bildquelle 50 bereitgestellten Bilder entsprechen, in den Arbeitsspeicher 11. Anwendungsabhängig kann die Bildquelle 50 auch direkt mit dem Arbeitsspeicher 11 verbunden sein.

Die Bildquelle 50 umfasst eine Sensoreinrichtung 51 und/oder einen Bildspeicher 52. Die Sensoreinrichtung 51 wird vorzugsweise durch ein Mess- und/oder Kamerasystem gebildet und enthält z. B. eine CCD-Kamera. Die Sensoreinrichtung 51 ist mit dem Bildspeicher 52, der als Zwischenspeicher dient, und der Arbeitsspeichereinrichtung 10 verbunden. Als Bildspeicher 52 kann jedes in der Video- und Rechentechnik übliche Speichermedium verwendet werden. Die Sensoreinrichtung ist zum Lichtempfang von dem Messsystem verbunden, in dem sich das mindestens eine Objekt zumindest zeitweilig befindet, dessen Zustand erfasst werden soll (optische Kopplung von Sensoreinrichtung und Messsystem).

Im Arbeitsspeicher 11 werden als punktweise zugeordnete Bildwerte in digitaler Form Daten gespeichert, wie sie als Bildparameter an sich bekannt sind. Diese Daten umfassen beispielsweise Rot-, Grün- und/oder Blau-Farbdaten, andere Farb- oder Grauwerte oder auch andere Datentypen, die für Objekteigenschaften charakteristisch sind, wie z. B. Temperaturdaten. Im Arbeitsspeicher 11 ist jeweils mindestens ein Bild in Form der zugehörigen punktweisen Bildwerte gespeichert. Es werden mindestens die Bildwerte gespeichert, die zur Umsetzung des erfindungsgemäßen Verfahrens verwendet werden sollen. Es können auch mehrere oder alle zu einem Messzyklus gehörigen Bilder oder mehrere zu einem bestimmten Objektzustand gehörende Bilder, die sich aus verschiedenen Datentypen von Bildwerten zusammensetzen, gespeichert sein. Da das erfindungsgemäße Verfahren mit mehreren Masken umgesetzt wird, können auch für die verschiedenen Masken verschiedene Bildwerte gespeichert und/oder verarbeitet werden.

Mit dem Arbeitsspeicher 11 ist die Filtereinrichtung 20 verbunden, mit der die Bildwerte von mindestens einem vorbestimmten Maskenpunkt an die Analysatorschaltung 30 übergeben werden. Die Filtereinrichtung 20 ist zur Auswahl des mindestens einen Maskenpunktes eingerichtet. Dies erfolgt anwendungsabhängig durch Auswahl eines bestimmten Maskenpunktes oder von mehreren Maskenpunkten, die eine oder mehrere zusammenhängende oder voneinander getrennte Masken innerhalb der im Arbeitsspeicher 11 gespeicherten Bilder bilden. Optional kann die Maskenauswahl mit einer Maskengebereinrichtung 60 gesteuert werden, die mit der Analysatorschaltung 30, einem Sensor 70 und/oder einer manuellen Eingabeeinrichtung 80 verbunden ist.

Die Maskengebereinrichtung 60 ist mit der Analysatorschaltung 30 verbunden, um ggf. die Maskenauswahl in Abhängigkeit vom Analyseergebnis zu ändern und/oder die Funktion der Analysatorschaltung 30 in Abhängigkeit von der Maskenauswahl zu steuern.

Mit der Analysatorschaltung 30 werden die Bildwerte der Maskenpunkte entsprechend den unten erläuterten Prozeduren ausgewertet, um Größen zu ermitteln, die für den Objektzustand charakteristisch sind. Diese Größen sind insbesondere der Bewegungszustand, die Oberflächeneigenschaften, die Größe und/oder das Vorhandensein oder Fehlen eines Objekts. Entsprechende Daten werden von der Analysatorschaltung 30 an die Anzeige-, Speicher- und/ oder Ausgabeeinrichtung 40 und ggf. an die Maskengebereinrichtung 60 geleitet.

Die Analysatorschaltung 30 kann auch mit der Sensoreinrichtung 51 der Bildquelle 50 und/oder einer in Figur 1 nicht illustrierten Einrichtung zur Beeinflussung von Messbedingungen der Sensoreinrichtung 51 verbunden sein. Dies ermöglicht beispielsweise die Steuerung der Beleuchtung und/oder des Fokus bei der Bildaufnahme in Abhängigkeit vom Analyseergebnis.

Die Einbindung der Vorrichtung 100 in ein praktisch realisiertes Messsystem ist in Figur 2 illustriert. Das Messsystem 200 umfasst ein fluidisches Mikrosystem 210, das als Mikrochip mit integrierten Kanalstrukturen und Fluidanschlüssen (nicht dargestellt) und Mikroelektroden 211 gebildet ist, einen Hochfrequenzgenerator 220 zur Ansteuerung des Mikrosystems 210 und ein Mikroskop 230 zur Beobachtung des Objektes 1 im Mikrosystem 210. Das Mikroskop 230 ist mit einer CCD-Kamera 51 ausgestattet, die mit der Vorrichtung 100 zur Erfassung des Bewegungszustandes des Objektes 1 verbunden oder ein Teil von dieser ist.

Mit dem Hochfrequenzgenerator 220 werden Wechselspannungen erzeugt und auf die Mikroelektroden 211 übertragen. Die Mikroelektroden (nur vier Elektroden illustriert) bilden z. B. eine Oktopolanordnung zur Bildung eines elektrischen Feldkäfigs, mit dem Objekte eingefangen, gehalten und/oder in Rotation versetzt werden können (siehe z. B. T. Schnelle et al. in "Biochim. Biophys. Acta", Band 1157, 1993, Seite 127 ff.). Beispielsweise wird bei Erzeugung eines hochfrequent rotierenden elektrischen Feldes im Feldkäfig unter Wirkung dielektrophoretischer Kräfte eine Rotation des Objektes 1 ausgelöst. Aus der Rotationsgeschwindigkeit, die mit dem erfindungsgemäßen Verfahren ermittelt werden soll, können Aussagen über dielektrische Eigenschaften des Objektes getroffen werden. Das Objekt ist beispielsweise eine biologische Zelle, ein Zellbestandteil, ein synthetischer Partikel oder auch eine Gruppe derartiger Partikel.

Mit dem Mikroskop 230 wird das Objekt 1 auf die CCD-Kamera 51 abgebildet, mit der ein Bildsignal (z. B. Videosignal) erzeugt und an einen Bildspeicher (siehe Figur 1, z. B. Videorecorder, DVD-Recorder) und/oder die Arbeitsspeichereinrichtung der erfindungsgemäßen Vorrichtung 100 weitergeleitet wird. Die Vorrichtung 100 wird vorzugsweise durch einen Computer bereitgestellt, der mit einer geeigneten Hardware-Schnittstelle zum Einlesen der Bildsignale von der CCD-Kamera 51 und entsprechender Hard- und/oder Software zur Bildauswertung entsprechend dem erfindungsgemäßen Verfahren ausgestattet ist. Die Vorrichtung 100 ist mit dem Hochfrequenzgenerator 220 und ggf. auch mit dem Mikroskoptisch des Mikroskops 230 und/oder Sensoren (z. B. Temperaturmessfühler) am Mikrosystem 210 verbunden.

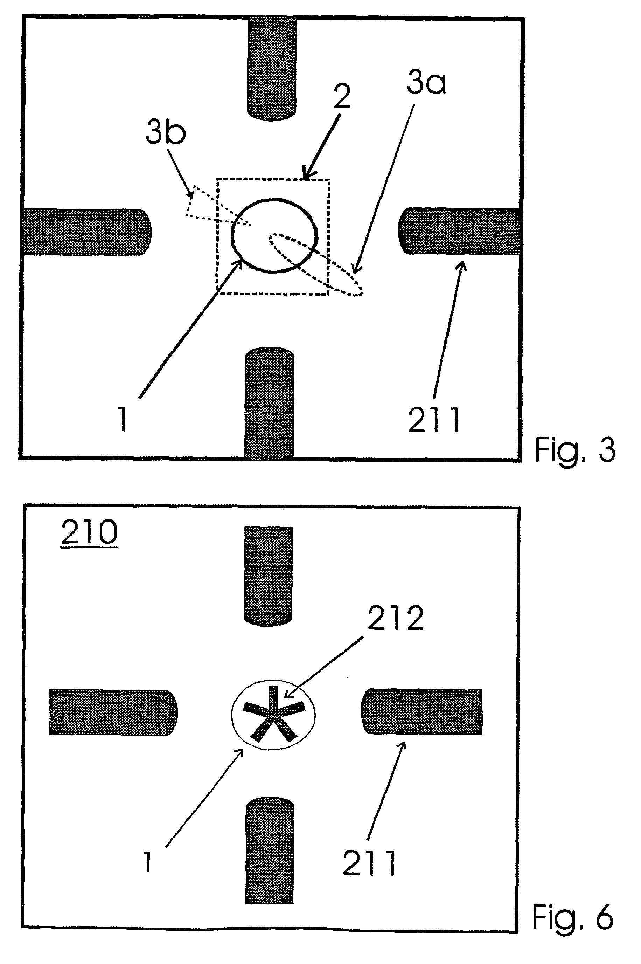

Ein mit der CCD-Kamera 51 aufgenommenes mikroskopisch vergrößertes Bild des Mikrosystems 210 ist beispielhaft in Figur 3 dargestellt. Um periodische Bewegungen des Objektes 1 auswerten zu können, muss ein Signal generiert werden, das mit der Periodik der Objektbewegung in einem vorbestimmten Zusammenhang steht. Hierzu werden die Bildwerte von Bildpunkten analysiert, die zu vorab ausgewählten Masken gehören.

Bei abgewandelten Ausführungsformen der Erfindung, insbesondere zur Erfassung des Zustandes und/oder des Vorhandenseins von Zellen, Zellbestandteilen, Zellgruppen und/oder Zellschnitten, kann das Mikroskop 230 unabhängig von einem Mikrochip betrieben und stattdessen mit anderen Substraten kombiniert werden, die die jeweiligen Objekte tragen (z. B. Substrate für histologische Untersuchungen).

In Figur 3 sind beispielhaft drei Masken 2, 3a, 3b mit ihren gestrichelt eingezeichneten Umrissen illustriert. Da die Masken keine optischen Blenden z. B. im Messsystem darstellen, sondern lediglich die Bildpunkte des im Arbeitsspeicher gespeicherten Bildes kennzeichnen, die der nachfolgenden Analyse unterzogen werden sollen, werden die Masken auch als virtuelle Masken bezeichnet. Eine virtuelle Maske kann das gesamte rotierende Objekt 1 (auch als Vollmaske bezeichnet, siehe Maske 2) oder nur einen Teilbereich des Objektes 1 (auch als Teilmaske beizeichnet, siehe Masken 3a, 3b) überdecken. Die Maske 3b eignet sich besonders gut zur Erfassung von periodischen oder nicht-periodischen Translationsbewegungen.

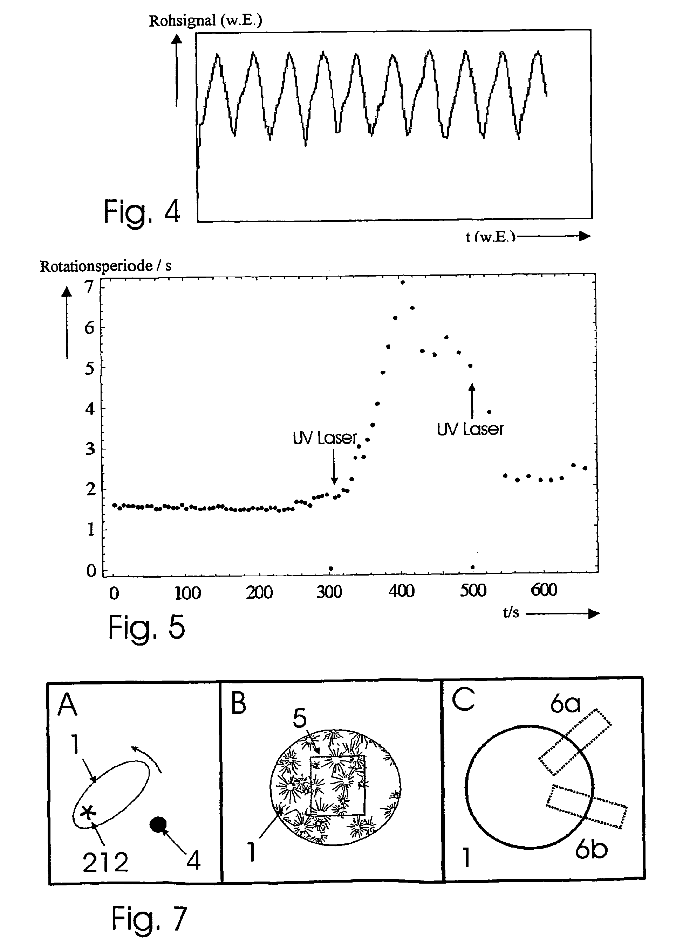

Aus den Bildwerten einer Vollmaske wird wie folgt ein periodisches Signal erzeugt. Zu Messbeginn (Zeit = 0) werden die Bildwerte (z. B. Farb- oder Grauwerte, entsprechende Informationen) der Bildpunkte innerhalb der Vollmaske pixelweise zwischengespeichert. Während der Rotation wird in vorbestimmten Zeitabständen die Summe über alle pixelweisen Signaländerungen über die innerhalb der Vollmaske befindlichen Bildpunkte gebildet. Diese Summe umfasst also alle Differenzwerte [Lichtsignal (Bildpunktposition, Zeit = 0) - Lichtsignal (Bildpunktposition, Zeit = t)] für alle Maskenpunkte. Die Summe liefert ein zeitabhängiges Rohsignal, das mit der Rotation des Objektes in direktem Zusammenhang steht. In Figur 4 ist das Rohsignal am Beispiel einer Langzeit-Rotationsmessung einer Hefezelle dargestellt. Der in Figur 4 dargestellte Zeitbereich entspricht einem Zeitfenster der Länge von ca. 4 Sekunden. Die Periodendauer der Rotation beträgt ca. 0.36 Sekunden. Die Ermittlung und Auswertung des Rohsignals erfolgen mit der Analysatorschaltung 30 (siehe Figur 1).

Mit Teilmasken vereinfacht sich bei geeigneter Auswahl der Form und Lage der Teilmaske die Ermittlung des Rohsignals. Bei Teilmasken 3a und 3b gemäß Figur 3 kann das Rohsignal beispielsweise durch die Summe der Bildwerte über alle Maskenpunkte zum jeweiligen Messzeitpunkt (Summe [Lichtsignal (Bildpunktposition, Zeit = t)]) gebildet werden. Alternativ kann auch die oben genannte oder eine andere, z. B. gewichtete Summenbildung erfolgen.

Die Analyse des Rohsignals auf Periodizität zur Ermittlung der Rotationsfrequenz des Objektes erfolgt mit einer Prozedur, die insbesondere in Abhängigkeit vom Objekt, der Bildqualität und der Signalqualität gewählt wird. Die Analyse basiert, insbesondere bei Langzeitmessungen, auf einer Fourieranalyse. Alternativ kann auch eine Häufigkeitsanalyse des Rohsignals durchgeführt werden. Hierzu werden die Abstände charakteristischer Signalpunkte innerhalb des Rohsignals (z. B. Extrema, Wendepunkte, Durchgänge durch den Mittelwert und dergleichen) ermittelt und die Häufigkeit einzelner Werte oder Wertegruppen analysiert. In Kombination mit einer Autokorrelationsanalyse, die neben den gesuchten Periodizitäten insbesondere auch die Bildwiederholfrequenz des Videosignals oder andere Frequenzen, die durch die digitale Bildbearbeitung bedingt sind, ergibt, können aus den Häufigkeiten die mit dem interessierenden Bewegungssignal korrelierten Perioden ermittelt werden. Diese Prozedur ist insbesondere auch bei relativ kurzzeitigen Messungen, z. B. über 1.5 Perioden, zuverlässig und reproduzierbar. Vorteilhafterweise ist die Rohsignalanalyse nicht an die Dimensionen des Objektes gebunden. Anwendungen können für beliebige Objektgrößen vom atomaren bis zum astronomischen Bereich realisiert werden.

Es ist möglich, dass sich die Rotationsgeschwindigkeit des Objektes und damit die Periodik des Rohsignals während einer Messung ändert. Die Änderung kann beispielsweise durch eine Änderung der Frequenz des rotierenden elektrischen Feldes im Feldkäfig, eine Änderung des Objektes, z. B. durch UV-Laser-Ablation, oder durch eine anderweitige Änderung der Objektbedingungen, z. B. durch einen Lösungswechsel (Einspülen von Pharmaka) ausgelöst werden. Wenn sich die Rotationsgeschwindigkeit ändert, kann erfindungsgemäß vorgesehen sein, dass die Messzeit (Zeitfenster der Messung) an die Rotationsgeschwindigkeit angepasst wird. Je langsamer oder schneller sich das Objekt dreht, desto länger oder kürzer erfolgen die Bildaufnahme und -auswertung. Vorteilhafterweise können mögliche Schädigungen, z. B. von biologischen Zellen durch Laserstrahlung, durch eine verringerte Bestrahlungszeit minimiert werden. Wenn das erfindungsgemäße Verfahren mit mehreren Masken umgesetzt wird, so ist auch die Anwendung verschiedener Zeitfenster für die verschiedenen Masken möglich. Dies ist beispielsweise von Vorteil, wenn mit den Masken verschiedene Teilbewegungen (z. B. Rotation mit überlagerter Translation) mit verschiedenen charakteristischen Zeitskalen erfasst werden.

In Figur 5 ist eine Rotationsmessung mit nicht-konstanter Rotationsfrequenz am Beispiel einer Messung mit einem Humanerythrozyten illustriert. Durch Einstrahlung mit einem UV-Laser bei 300 s und 500 s erfolgte eine gezielte Störung der Rotation. Die analysierte Rotationsperiode ergibt den Wert Null. Dies zeigt an, dass mit der jeweils angewendeten Analyseprozedur keine Rotationsgeschwindigkeit ermittelt werden konnte. Dies bedeutet entweder einen Stillstand des Objektes oder eine starke Änderung der Rotationsgeschwindigkeit oder eine Rauschstörung. Zur Berücksichtigung von Rauschstörungen kann vorgesehen sein, dass das Rohsignal während der Analyse laufend auf Rauschkomponenten untersucht und ein Parameter für die Signalgüte ermittelt wird. Bei der Ermittlung der Rauschkomponenten werden insbesondere die relative Häufigkeit der Periodenkandidaten innerhalb einer Größenklassenanalyse, die Höhe der Autokorrelationsfunktion für diese Periodenkandidaten und ein Vergleich charakteristischer Punkte des Messspektrums mit für eine solche Periodizität zu erwartenden Charakteristika des jeweiligen Objektes berücksichtigt.

Falls eine Objektrotation um einen Drehpunkt beobachtet werden soll, der im Messsystem nicht ortsfest ist, kann eine virtuelle Maske zur Detektion der Translation verwendet werden, die der Rotation überlagert ist. Die Maskenpunkte dieser Masken werden so gewählt, dass in den gespeicherten Bildern die Umrandung des Objektes zumindest in Translationsrichtung die Maske durchquert. Beispielsweise kann die virtuelle Maske 3 in Figur 3 zur Translationsdetektion verwendet werden.

Erfindungsgemäß kann vorgesehen sein, dass der mindestens eine Maskenpunkt oder die mindestens eine Maske in Bezug auf den Ort, die Größe und/oder Form während der Messung verändert wird. Dies erfolgt vorzugsweise in Abhängigkeit vom Ergebnis der Bildwertanalyse, insbesondere in Abhängigkeit vom Bewegungszustand, Oberflächenmerkmalen, Größenmerkmalen und/oder dem Vorhandensein des Objektes. Ist beispielsweise eine Rotation mit einer Translation überlagert, so kann die Wahl der Maske der Translationsbewegung nachgeführt werden. Zur zeitlich veränderlichen Maskenauswahl kann in der Filtereinrichtung 20 (siehe Figur 1) eine hierzu angepasste Schaltung oder ein entsprechendes Programm vorgesehen sein. Alternativ wird mit der Analysatorschaltung 30 und der Maskengebereinrichtung 60 ein Regelkreis gebildet.

Eine abgewandelte Ausführungsform des Messsystems 200 ist in Figur 6 illustriert. Das Mikrosystem 210 ist lediglich mit vier Mikroelektroden 211 in einer Ebene ausgestattet. Mit den Mikroelektroden 211 werden wie bei der Ausführungsform gemäß Figur 1 hochfrequent rotierende elektrische Felder erzeugt, unter deren Wirkung das Objekt 1 in Rotation versetzt wird. Die Elektroden genügen jedoch nicht zur Bildung eines geschlossenen Feldkäfigs. Daher wird das Objekt 1 mit einem optischen Käfig 212 zwischen den Mikroelektroden 211 positioniert. Der optische Käfig 212 wird mit einer Laserpinzette erzeugt, die vorzugsweise mit dem Mikroskop gebildet wird, das auch der Abbildung des Objektes dient. Diese Ausführungsform besitzt insbesondere den Vorteil, dass mit dem optischen Käfig 212 Partikel in Position gehalten werden können, die andernfalls um einen nicht-ortsfesten Drehpunkt rotieren würden.

In Figur 7 sind weitere Maskenformen zur Umsetzung des erfindungsgemäßen Verfahrens gezeigt. Die Minimalgröße einer Teilmaske (siehe Figur 3) ist durch einen einzelnen Maskenpunkt gegeben. Der Bildwert des Maskenpunktes besitzt eine Länge von einem Byte. In Figur 7A ist eine Punktmaske 4 beispielhaft vergrößert eingezeichnet. Die Punktmaske 4 ist so ausgewählt, dass das Bild des Objektes 1 während einer Umdrehung nicht ständig auf den Maskenpunkt fällt. Das Objekt 1 wird beispielsweise mit einem optischen Käfig 212 gehalten. Bei Rotation wird ein rechteckförmiges Rohsignal gebildet, in dem sich Signalwerte entsprechend der Abbildung der Umgebung des Objektes 1 auf den Maskenpunkt 4 und Signalwerte entsprechend der Abbildung des Objektes 1 auf den Maskenpunkt 4 abwechseln. Die Frequenz des Rohsignals entspricht der Rotationsfrequenz des Objektes 1. Bei ausreichend starker Flüssigkeitsbewegung ist es erfindungsgemäß alternativ möglich, die Objektrotation mit Masken zu detektieren, auf die lediglich die Suspensionsflüssigkeit in der Umgebung des Objektes abgebildet wird und keine Überlappung mit dem Objekt erfolgt.

Bei der in Figur 7B dargestellten Ausführungsform der Erfindung wurden Maskenpunkte als Maske 5 ausgewählt, auf die ein innerer Teilbereich des Objektes 1 abgebildet wird. Wenn das Objekt 1 ein ausreichend unveränderliches Drehzentrum besitzt und die abgebildete Oberfläche des Objektes 1 einen Strukturkontrast aufweist, kann das Bild des Objektes 1 die Maske 5 vollständig überdecken. Der Strukturkontrast wird ggf. erst durch eine Bildbearbeitung in der Arbeitsspeichereinrichtung oder der Analysatorschaltung (siehe Figur 1) erzeugt.

Zur Detektion der Rotationsrichtung werden mindestens zwei Teilmasken 6a, 6b gemäß Figur 7C verwendet, die vorzugsweise in Größe und Lage symmetrisch zum jeweiligen Drehzentrum angeordnet sind. Es können auch andere Masken, beispielsweise Dreiecksmasken gemäß Maske 3b in Figur 3 gebildet werden. Durch eine Korrelationsanalyse der Rohsignale von den Masken 6a, 6b kann die Drehrichtung des Objektes 1 ermittelt werden. Es ist auch möglich, mehrere Masken gleicher oder verschiedener Form, Größe oder Lage zum Drehzentrum so zu wählen, dass ein periodisches, jedoch zeitlich asymmetrisches Signal erzeugt wird, dessen Asymmetrie von den jeweiligen Bewegungsrichtungen, insbesondere von Translationsbewegungen, abhängt. Die zur Unterscheidung der Translationsrichtungen benötigten Parameter der Rohsignale können als Referenzwerte gespeichert sein oder mit geeigneten Algorithmen, z. B. mit neuronalen Netzwerken, erlernt werden.

Durch Auswahl einer Maske entsprechend dem Bildbereich, in dem sich ein Objektteil befindet oder bewegt, kann erfindungsgemäß der Zustand des Gesamtobjektes oder des detektierten Objektteils erfasst werden.

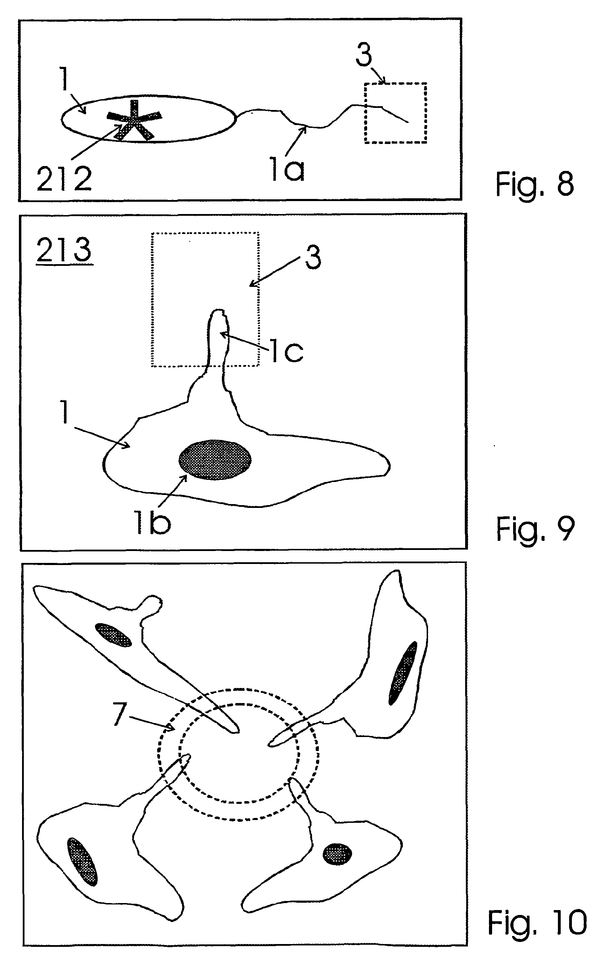

Gemäß Figur 8 ist die Teilmaske 3 so gewählt, dass ein fadenförmiger Fortsatz 1a des Objektes 1 auf die Maskenpunkte abgebildet wird. Das Objekt 1 wird mit einem optischen Käfig 212 positioniert. Durch Strömungen der Suspensionsflüssigkeit und/oder Eigenbewegungen werden die Bildwerte der Maske 3 moduliert. Aus dem entsprechenden Rohsignal werden die Frequenzen der entsprechenden Oszillationsbewegungen abgeleitet.

Zur eindimensionalen Detektion von positiven oder negativen Größenänderungen (Wachstums- oder Schrumpfprozesse) gemäß Figur 9 wird eine Teilmaske 3 so ausgewählt, dass während des Wachstumsprozesses das Bild des Objektes 1 einen zunehmenden oder abnehmenden Teil der Maske 3 abdeckt. Beim dargestellten Beispiel ist das Objekt 1 eine biologische Zelle, die auf einem Substrat 213 adsorbiert ist. Von der Zelle mit dem Zellkern 1b ausgehend wächst eine Ausstülpung 1c der Zellmembran über das Substrat 213. Bei ausreichendem Kontrast der Ausstülpung 1c gegenüber dem Substrat 213 verändert sich das mit der Maske 3 detektierte Rohsignal quantitativ charakteristisch entsprechend dem zunehmenden Wachstum. Je nach Richtung des Wachstums oder Überdeckungsgrad der Maske 3 kann erfindungsgemäß vorgesehen sein, dass im Zeitverlauf eine neue Maske mit einer angepassten Form und/oder Position ausgewählt und zur weiteren Detektion des Wachstumsprozesses verwendet wird.

Figur 10 illustriert eine Abwandlung der Detektion von Wachstumsprozessen an mehreren Objekten, die, beispielsweise unter der Wirkung eines elektrischen Feldes oder eines chemischen Konzentrationsgradienten, von einem gemeinsamen Anfangspunkt weg oder auf ein gemeinsames Ziel hin wachsen. Bei dieser Gestaltung ist eine ringförmige Maske 7 vorgesehen, deren Form, Größe und Position wiederum in Abhängigkeit vom Fortschritt des Wachstumsprozesses veränderlich ist.

Die in den Figuren 9 und 10 illustrierten Detektionsprinzipien können analog auch auf andere Wachstumsprozesse, beispielsweise von Zellkulturen, Ausdehnungsprozesse, z. B. zur Bestimmung von thermischen Ausdehnungskoeffizienten, oder auch Prozesse bei der Verkehrsüberwachung angewendet werden.

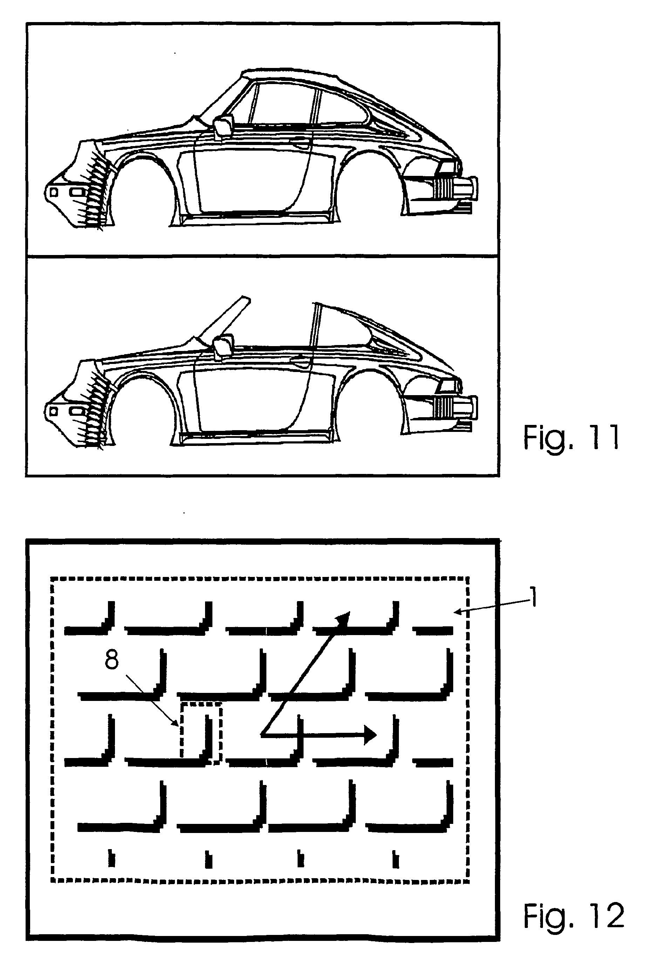

Die Objekterfassung an makroskopischen Körpern ist in den Figuren 11 und 12 illustriert (keine Ausführungsformen der Erfindung). Die dargestellte Erfassung einer räumlichen Struktur von einem oder mehreren Objekten oder Objektteilen ist allerdings entsprechend auch an mikroskopischen Objekten (z. B. Zellschnitten) umsetzbar. Es wird hierbei nicht die zeitliche Änderung eines Objektes, sondern die Gleichartigkeit einer Vielzahl von Objekten erfasst. In einer automatischen Fertigungslinie oder Prozessstraße werden Produkte (z. B. Fahrzeugkarosserien) aufeinanderfolgend mit einer Kameraeinrichtung aufgenommen. Die Bildfolge wird entsprechen dem oben beschriebenen Verfahren analysiert. Die mindestens eine Maske wird so gewählt, dass beispielsweise kritische Punkte bei der Fertigung auf die Maske abgebildet werden. Veränderungen des Maskenrohsignals von Bild zu Bild weisen auf das Auftreten oder Fehlen bestimmter Objektmerkmale hin. Eine Abwandlung ist in Figur 12 illustriert. Bei der Detektion von Fabrikationsfehlern bei einer Verbundfertigung oder -verarbeitung wird eine Kamera über einem Objekt 1 (teilweise dargestellt) bewegt, das auf Strukturperiodizität zu prüfen ist. Veränderungen des Signals der beispielhaft eingezeichneten Maske 8 weisen auf Durchbrechungen der Strukturperiodizität hin.

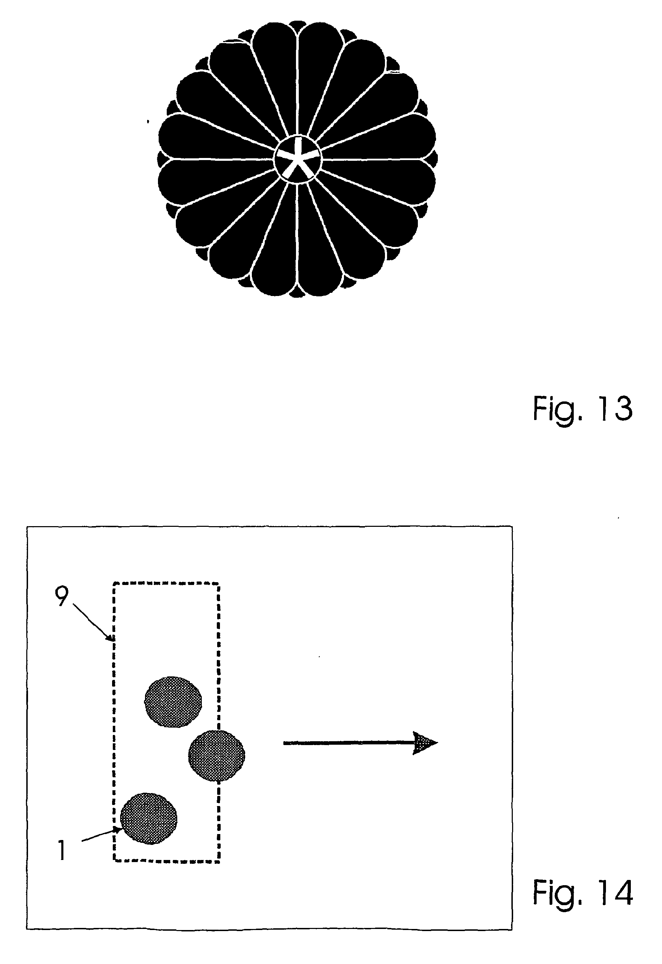

Besitzen die zu untersuchenden Objekte selbst eine periodische Struktur, so kann die Zahl der zur Analyse der Bewegungsperiodik erforderlichen Bilder verringert werden. Je höher die Raumfrequenz der Objektperiodizität ist, desto stärker kann die Analyse der Periodik verkürzt werden. In Figur 13 ist beispielhaft ein Objekt mit symmetrisch angeordneten Segmenten dargestellt, bei dem die Rotationsfrequenz in einem Zeitbereich ermittelt werden kann, der geringer als die Periodendauer der Rotation ist. Derartige periodische Objekte sind beispielsweise mit periodischen Mikrostrukturen, Zahnrädern oder auch periodischen Bauwerken, wie z. B. Eisenbahnschwellen, gegeben.

Das erfindungsgemäße Verfahren ist auch zur Detektion des Vorhandenseins oder Fehlens oder zum Zählen von Objekten geeignet. In Figur 14 ist die Zählung gleichartiger Objekte 1 mit einer Maske 9 illustriert. Wird beispielsweise ein durchströmter Bereich eines Mikrosystems mit einer Kameraeinrichtung aufgenommen, so wird das Signal der Maske 9 entsprechend dem Durchtritt der Objekte 1 moduliert. Je nach Anzahl und Stärke der Modulationen kann die Zahl der Objekte erfasst werden, die den auf die Maske 9 abgebildeten Bereich durchtreten. Entsprechend kann auch das Vorhandensein oder Fehlen mindestens eines Objektes detektiert werden.

Ein wichtiger Vorteil der Erfindung gegenüber herkömmlichen Techniken besteht in der Möglichkeit, die ausgewählte Maske anwendungsabhängig nach bestimmten Parametern zu optimieren. Da das Rohsignal der Maske selbst einen Güteparameter (Signalgüte) liefern kann (Ermittlung eines Gütesignals aus dem Rohsignal), kann die Auswahl der Maske mit einem Regelkreis automatisch auf ein Optimum hin angepasst werden. Zu dieser Anpassung werden beispielsweise an sich bekannte evolutive Algorithmen verwendet, was insbesondere bei Objekten mit unregelmäßigen Topologien von Vorteil ist. Ferner kann auch die Zahl der berücksichtigten Objektbilder oder das Zeitfenster der Messung optimiert werden.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Erfassung des Zustandes und/oder des Vorhandenseins eines Objekts (1) in einem Messsystem, mit den Schritten:
- Bereitstellung einer Vielzahl von Bildern des Objekts (1) oder mindestens eines Objektteiles aus einer Bildquelle (50), wobei jedes Bild Bildpunkte mit jeweils mindestens einem Bildwert umfasst und die Vielzahl von Bildern eine zeitliche Folge von Objektzuständen und/oder eine Vielzahl von Objekten oder Objektteilen repräsentieren, wobei die Bilder in einer Arbeitsspeichereinrichtung (10) gespeichert werden, die mit der Bildquelle (50) verbunden ist, und
- Analyse der Bildwerte von mehreren Maskenpunkten (2 bis 9) aus den Bildpunkten für eine vorbestimmte Messzeit und/oder für eine vorbestimmte Anzahl von Bildern, um den Zustand und/oder das Vorhandensein des Objekts (1) zu erfassen, wobei die Maskenpunkte (2 bis 9) aus den in der Arbeitsspeichereinrichtung (10) gespeicherten Bildpunkten ausgewählt sind und mehrere Masken bilden,
**dadurch gekennzeichnet, dass**
- die Auswahl der Masken in Bezug auf ihre Lage, Anzahl und Größe zeitlich veränderlich ist und entsprechend einem vorbestimmten Zeitprogramm oder in Abhängigkeit vom erfassten Zustand des Objekts und/oder von Umgebungsbedingungen des Objekts im Messsystem verändert wird.

2. Verfahren gemäß Anspruch 1, bei dem als Zustand des Objekts (1) der Bewegungszustand, Oberflächenmerkmale, Volumenmerkmale und/oder Größenmerkmale des Objektes ermittelt werden.

3. Verfahren gemäß Anspruch 1 oder 2, bei dem mehrere verschiedene Masken zeitgleich oder zeitlich aufeinanderfolgend verwendet werden

4. Verfahren gemäß einem der vorhergehenden Ansprüche, bei dem aus der Analyse des zeitlichen Verlaufs der Bildwerte der Maskenpunkte die Bewegungsrichtung des Objekts erfasst wird.

5. Verfahren gemäß einem der vorhergehenden Ansprüche, bei dem die Analyse des zeitlichen Verlaufs der Bildwerte eine Frequenzanalyse, eine Korrelationsanalyse, eine Fourieranalyse, eine Größenklassenanalyse, eine Häufigkeitsanalyse und/oder eine Maskengrößenanalyse eines Rohsignals umfasst, das aus den Bildwerten des mindestens einen Maskenpunktes abgeleitet ist.

6. Verfahren gemäß einem der vorhergehenden Ansprüche, bei dem die Vielzahl von Bildern mindestens zwei Bilder umfasst und durch eine Echtzeitaufnahme mit einer Sensoreinrichtung (51) oder einen Auslesevorgang aus einem Bildspeicher (52) in der Arbeitsspeichereinrichtung (10) bereitgestellt wird.

7. Verfahren gemäß einem der vorhergehenden Ansprüche, bei dem den Bildpunkten Bildwerte zugeordnet werden, die Farbwerte, Helligkeits- oder Grauwerte oder andere Werte umfassen, die für vorbestimmte Zustandsgrößen des Objekts charakteristisch sind.

8. Verfahren gemäß Anspruch 7, bei dem die Bildwerte durch Auslesen der Daten eines Framegrabber-Schaltkreises ermittelt werden.

9. Verfahren gemäß einem der vorhergehenden Ansprüche, bei dem die Messzeit vorab fest oder in Abhängigkeit vom Bewegungszustand des Objekts variabel eingestellt wird.

10. Verfahren gemäß einem der vorhergehenden Ansprüche, bei dem nach der Bereitstellung der Bilder und vor Auswahl des mindestens einen Maskenpunktes eine Bildvorbearbeitung der Bilder, insbesondere zur Kontrasterhöhung und/oder zur Erzeugung von Differenzbildern, erfolgt.

11. Vorrichtung zur Erfassung des Zustandes und/oder des Vorhandenseins eines Objekts, mit:
- einer Bildquelle (50), die zur Bereitstellung einer zeitlichen Folge von Bildern des Objekts oder eines Teiles des Objekts eingerichtet ist und eine Sensoreinrichtung (51) und/oder einen Bildspeicher (52) umfasst, wobei jedes Bild Bildpunkte mit jeweils mindestens einem Bildwert umfasst,
- einer Analysatorschaltung (30), die zur Analyse von Bildwerten von mehreren Maskenpunkten (2 bis 9) aus den Bildpunkten für eine vorbestimmte Messzeit und/oder für eine vorbestimmte Anzahl von Bildern eingerichtet ist und Daten bereitstellt, die für den Bewegungszustand, Oberflächenmerkmale, Größenmerkmale und/oder das Vorhandensein des Objekts charakteristisch sind,
- einer Arbeitsspeichereinrichtung (10) zum Speichern von mindestens zwei Bildern des Objekts (1) oder des Objektteils, wobei die Arbeitsspeichereinrichtung (10) mit der Bildquelle (50) verbunden ist, wobei die Maskenpunkte (2 bis 9) aus den in der Arbeitsspeichereinrichtung (10) gespeicherten Bildpunkten ausgewählt sind und mehrere Masken bilden, und
- einer Filtereinrichtung (20) zur Ermittlung von Bildwerten der gespeicherten Bilder an mehreren vorgewählten Maskenpunkten,
**gekennzeichnet durch**
- eine Maskengebereinrichtung (60) zur Auswahl der Maskenpunkte, die mit der Filtereinrichtung (20), der Analysatorschaltung (30), einem Sensor (70) und/oder einer manuellen Eingabeeinrichtung (80) verbunden ist, wobei die Auswahl der Masken in Bezug auf ihre Lage, Anzahl und Größe zeitlich veränderlich und die Maskengebereinrichtung (60) dazu eingerichtet ist, die Masken entsprechend einem vorbestimmten Zeitprogramm oder in Abhängigkeit vom erfassten Zustand des Objekts und/oder von Umgebungsbedingungen des Objekts im Messsystem auszuwählen.

12. Vorrichtung gemäß Anspruch 11, bei der die Sensoreinrichtung (51) eine Mess- oder Kameraeinrichtung umfasst.

13. Vorrichtung gemäß einem der Ansprüche 11 oder 12, bei der die Sensoreinrichtung (51) ein Mikroskop (230) aufweist.

14. Vorrichtung gemäß Anspruch 13, bei der das Mikroskop (230) zur Bildaufnahme und zur Erzeugung eines optischen Käfigs eingerichtet ist.

15. Vorrichtung gemäß einem der Ansprüche 11 bis 14, bei der die Arbeitsspeichereinrichtung (10) durch einen Framegrabber-Schaltkreis (Framegrabber-Karte) gebildet wird.

16. Vorrichtung gemäß einem der Ansprüche 11 bis 15, die eine Anzeige-, Speicherungs- und/oder Ausgabeeinrichtung (40) aufweist, die dazu eingerichtet ist, die von der Analysatorschaltung (30) bereitgestellten Daten anzuzeigen, zu speichern und/oder auszugeben.

17. Vorrichtung gemäß einem der Ansprüche 11 bis 16, die zur Umsetzung eines Verfahrens gemäß einem der Ansprüche 1 bis 10. eingerichtet ist.

18. Verwendung eines Verfahrens oder einer Vorrichtung gemäß einem der vorhergehenden Ansprüche:
- zur Erfassung des Bewegungs- oder Ruhezustandes eines Objekts,
- zur Erfassung der Bewegungsrichtung eines Objekts,
- zur Ermittlung einer Formänderung eines Objekts,
- zur Ermittlung von Oberflächen- oder Volumenmerkmalen des Objekts,
- zum Zählen von Objekten, und/oder
- zur Erfassung des Zustandes und/oder des Vorhandenseins von biologischen Objekten, insbesondere Zellen, Zellbestandteilen, Zellgruppen oder Zellschnitten.

## Claims

1. A method for determining the condition and/or the presence of an object (1) in a measuring system, with the steps:
- provision of a plurality of images of the object (1) or at least a part of an object from an image source (50), wherein every image comprises image points each with at least one image value and the plurality of images represent a temporal sequence of object conditions and/or a plurality of objects or parts of objects, wherein the images are stored in a working memory (10) which is connected to the image source (50), and
- analysis of the image values from several mask points (2 to 9) from the image points for a predetermined measuring period and/or for a predetermined number of images to determine the condition and/or the presence of the object (1), wherein the mask points (2 to 9) are selected from the image points stored in the working memory unit (10) and constitute several masks,
**characterized in that**
- the selection of the masks with regards to their position, number and size is changeable in time and is changed according to a predetermined time program or dependent upon a determined condition of the object and/or the surrounding conditions of the object in the measuring system.

2. The method according to Claim 1, in which as the condition of the object (1), the movement condition, surface characteristics, volume characteristics and/or size characteristics of the object are determined.

3. The method according to Claim 1 or 2, in which several different masks are used simultaneously or temporally in sequence.

4. The method according to any one of the preceding claims, in which the direction of movement of the object is determined based on the analysis of the temporal course of the image values of the mask points.

5. The method according to any one of the preceding claims, in which the analysis of the temporal course of the image values comprises a frequency analysis, a correlation analysis, a Fourier analysis, a size class analysis, a frequency of occurrence analysis and/or a mask size analysis of a raw signal that is derived from the image values of the at least one mask point.

6. The method according to any one of the preceding claims, in which the plurality of images includes at least two images and is provided in the working memory unit (10) by a real-time recording with a sensor device (51) or a read-out operation from an image memory (52).

7. The method according to any one of the preceding claims, in which the image points are assigned to image values which comprise color values, brightness or gray values or other values that are characteristic for predetermined condition variables of the object.

8. The method according to Claim 7, in which the image values are determined by reading out the data from a frame grabber circuit.

9. The method according to any one of the preceding claims, in which in advance the measuring time is fixed set variably in dependency on the movement condition of the object.

10. The method according to any one of the preceding claims, in which, after the provision of the images and prior to the selection of the at least one mask point, a preliminary image processing of the images, in particular for increasing the contrast and/or generating difference images, occurs.

11. A device for determining the condition and/or presence of an object with:
- an image source (50), which is adapted for providing a temporal sequence of images of the object or a part of the object and which comprises a sensor device (51) and/or an image memory (52), wherein every image includes image points each with at least one image value,
- an analyzer circuit (30), which is adapted for analyzing image values of several masks points (2 to 9) from the image points for a predetermined measuring period and/or for a predetermined number of images and provides data that are characteristic for the movement condition, surface characteristics, size characteristics and/or the presence of the object,
- a working memory device (10) for storing at least two images of the object (1) or the part of the object, wherein the working memory device (10) is connected to the image source (50), wherein the mask points (2 to 9) are selected from the image points stored in the working memory unit (10) and form several masks, and
- a filter device (20) for determining the image values of the stored images at several predetermined mask points,
**characterized by**
- a mask encoding device (60) for selecting the mask points, which is connected to the filter device (20), the analyzer circuit (30), a sensor (70) and/or a manual entry device (80), wherein the selection of the masks with regards to their position, number and size is variable in time and the mask encoding device (60) is set up so that the masks are selected in the measuring system according to a predetermined time program or dependent upon the determined status of the object and/or the environmental conditions surrounding the object.

12. The device according to Claim 11, in which the sensor device (51) comprises a measuring or camera device.

13. The device according to any one of Claims 11 or 12, in which the sensor device (51) has a microscope (230).

14. The device according to Claim 13, in which the microscope (230) is set up to record images and generate an optical cage.

15. The device according to any one of Claims 11 to 14, in which the working memory device (10) is formed by a frame grabber circuit (frame grabber card).

16. The device according to any one of Claims 11 to 15, which has a display, storage and/or output device (40) that is set up to display, save and/or output the data provided by the analyzer circuit (30).

17. The device according to any one of Claims 11 to 16, which is set up for implementing a method according to any one of Claims 1 to 10.

18. Using a method or a device according to one of the preceding claims:
- for a registration of the movement condition or resting condition of an object,
- for a registration of the movement direction of an object,
- for a determination of a shape change of an object,
- for a determination of surface features or volume features of the object,
- for counting of objects, and/or
- for a registration of a condition and/or of a presence of biological objects, in particular cells, parts of cells, cell groups or cell intersections.

## Revendications

1. Procédé de détection de l'état et/ou de la présence d'un objet (1) dans un système de mesure, comprenant les étapes suivantes :
- préparation d'une pluralité d'images de l'objet (1) ou d'au moins une partie d'objet par une source d'image (50), chaque image comprenant une pluralité de points d'image avec au moins une valeur d'image respective et la pluralité d'images représentant une séquence temporelle d'états d'objet et/ou une pluralité d'objets ou de parties d'objet, les images étant mémorisées dans un dispositif de mémoire de travail (10) relié à la source d'image (50), et
- analyse des valeurs d'image d'au moins un point de masque (2 à 9) de la pluralité de points d'image pour un temps de mesure prédéterminé et/ou pour un nombre d'images prédéterminé, afin de détecter l'état et/ou la présence de l'objet (1), les points de masque (2 à 9) étant sélectionnés parmi les points d'image mémorisés dans le dispositif de mémoire de travail (10) et formant plusieurs masques,
**caractérisé en ce que**
- la sélection des masques est temporellement modifiable quant à leur position, leur nombre et leur grandeur et est modifiée suivant un programme temporel prédéterminé ou en fonction de l'état de l'objet détecté et/ou de conditions d'environnement de l'objet dans le système de mesure.

2. Procédé selon la revendication 1, où l'état de déplacement, les caractéristiques de surface, les caractéristiques de volume et/ou les caractéristiques de grandeur de l'objet sont détectées en tant qu'état de l'objet (1).

3. Procédé selon la revendication 1 ou 2, où plusieurs masques différents sont utilisés simultanément ou successivement dans le temps.

4. Procédé selon l'une des revendications précédentes, où la direction de déplacement de l'objet est détectée par analyse de la courbe temporelle des valeurs d'image des points de masque.

5. Procédé selon l'une des revendications précédentes, où l'analyse de la courbe temporelle des valeurs d'image comprend une analyse fréquentielle, une analyse de corrélation, une analyse de Fourier, une analyse de classe de grandeur, une analyse de fréquence d'occurrence et/ou une analyse de grandeur de masque d'un signal brut dérivé des valeurs d'image du ou des points de masque.

6. Procédé selon l'une des revendications précédentes, où la pluralité d'images comprend au moins deux images et est préparée par un enregistrement en temps réel d'un dispositif de capteur (51), ou par un processus d'extraction d'une mémoire d'image (52) dans le dispositif de mémoire de travail (10).

7. Procédé selon l'une des revendications précédentes, où des valeurs d'image sont associées aux points d'image, lesquelles comprennent des valeurs de couleurs, de luminosité ou de gris, ou d'autres valeurs caractéristiques pour des grandeurs d'état prédéterminées de l'objet.

8. Procédé selon la revendication 7, où les valeurs d'image sont déterminées par extraction des données d'un circuit numériseur d'images.

9. Procédé selon l'une des revendications précédentes, où le temps de mesure est réglé préalablement de manière fixe ou variable en fonction de l'état de déplacement de l'objet.

10. Procédé selon l'une des revendications précédentes, où un prétraitement des images est effectué après préparation des images et avant sélection du ou des points de masque, en particulier pour un renforcement de contraste et/ou une génération d'images différentielles.

11. Système de détection d'état d'un objet, comportant :
- une source d'image (50) prévue pour la préparation d'une séquence temporelle d'images de l'objet et/ou d'une partie de l'objet et comprenant un dispositif de capteur (51) et/ou une mémoire d'image (52), chaque image comprenant des points d'image avec au moins une valeur d'image respective,
- un circuit d'analyseur (30) prévu pour l'analyse des valeurs d'image de plusieurs points de masque (2 à 9) parmi les points d'image pour un temps de mesure prédéterminé et/ou pour un nombre d'images prédéterminé, et préparant des données représentatives pour l'état de déplacement, les caractéristiques de surface, les caractéristiques de grandeur et/ou la présence de l'objet,
- un dispositif de mémoire de travail (10) destiné à mémoriser au moins deux images d'un objet (1) ou de la partie d'objet, ledit dispositif de mémoire de travail (10) étant relié à la source d'image (50), les points de masque (2 à 9) étant sélectionnés parmi les points d'image mémorisés dans le dispositif de mémoire de travail (10) et formant plusieurs masques, et
- un dispositif de filtre (20) pour la détermination de valeurs d'image des images mémorisées sur plusieurs points de masque présélectionnés,
**caractérisé par**
- un dispositif d'entrée de masques (60) pour la sélection des points de masque, relié au dispositif de filtre (20), au circuit d'analyseur (30), à un capteur (70) et/ou à un dispositif de saisie manuelle (80), la sélection des masques étant temporellement modifiable quant à leur position, leur nombre et leur grandeur et le dispositif d'entrée de masques (60) étant prévu pour sélectionner les masques suivant un programme temporel prédéterminé ou en fonction de l'état de l'objet détecté et/ou de conditions d'environnement de l'objet dans le système de mesure.

12. Système selon la revendication 11, où le dispositif de capteur (51) comprend un dispositif de mesure ou de caméra.

13. Système selon la revendication 11 ou 12, où le dispositif de capteur (51) comporte un microscope (230).

14. Système selon la revendication 13, où le microscope (230) est prévu pour l'enregistrement d'image et pour la génération d'une cage optique.

15. Système selon l'une des revendications 11 à 14, où le dispositif de mémoire de travail (10) est formé par un circuit numériseur d'images (carte de numérisation d'image).

16. Système selon l'une des revendications 11 à 15, comportant un dispositif d'affichage, de mémorisation et/ou d'édition (40) prévu pour afficher, mémoriser et/ou éditer les données préparées par le circuit d'analyseur (30).

17. Système selon l'une des revendications 11 à 16, prévu pour appliquer un procédé selon l'une des revendications 1 à 10.

18. Utilisation d'un procédé ou d'un système selon l'une des revendications précédentes :
- pour détecter l'état de déplacement ou de repos d'un objet,
- pour détecter la direction de déplacement d'un objet,
- pour déterminer un changement de forme d'un objet,
- pour déterminer des caractéristiques de surface ou de volume de l'objet,
- pour le comptage d'objets, et/ou
- pour détecter l'état et/ou la présence d'objets biologiques, en particulier des cellules, des composants cellulaires, des groupes de cellules ou des coupes cellulaires.
